# EUROPEAN PATENT SPECIFICATION

(11) **EP 3 599 601 B1**
(45) Date of publication and mention of the grant of the patent: **06.11.2024**
(21) Application number: 19188509.4
(22) Date of filing: 26.07.2019
(51) Int. Cl.: G09G 3/20, G06F 3/048, G06F 1/16

(54) **METHOD, APPARATUS, ELECTRONIC DEVICE AND STORAGE MEDIUM FOR CONTROLLING BRIGHTNESS OF SCREEN**
VERFAHREN, EINRICHTUNG, ELEKTRONISCHE VORRICHTUNG UND SPEICHERMEDIUM ZUR STEUERUNG DER HELLIGKEIT EINES BILDSCHIRMS
PROCÉDÉ, APPAREIL, DISPOSITIF ÉLECTRONIQUE ET SUPPORT D'ENREGISTREMENT POUR RÉGLER LA LUMINOSITÉ D'ÉCRAN

(30) Priority: 27.07.2018 CN 201810847098
(43) Date of publication of application: 29.01.2020
(73) Proprietor: Beijing Xiaomi Mobile Software Co., Ltd., Beijing 100085 (CN)
(72) Inventor: TANG, Ju, Beijing 100085 (CN)
(74) Representative: dompatent von Kreisler Selting Werner - Partnerschaft von Patent- und Rechtsanwälten mbB

(56) References cited:
- EP-A1- 3 349 098
- US-A1- 2016 139 702

## Description

### TECHNICAL FIELD

The present disclosure relates generally to the field of screen control technologies, and in particular, to a method, apparatus, electronic device, and storage medium for controlling a brightness of a screen.

### BACKGROUND

In the related art, an electronic device, such as a mobile phone and a tablet, can automatically adjust the brightness of its screen according to a change in light brightness of the environment in which the electronic device is located. However, in the case where the light brightness of the environment does not change, if the user holds the electronic device horizontally, that is, the user holds opposite ends of the electronic device with hands where one end of the electronic device is provided with a photosensitive sensor, the photosensitive sensor of the electronic device may be blocked by a finger or the palm of the user, then the photosensitive sensor may misjudge that the light of the current environment changes, which triggers the automatic adjustment of the brightness of the screen of the electronic device to adapt the brightness of the screen to the current environment.

Therefore, in the related art, the screen brightness adjustment may still proceed under the condition that the ambient light intensity does not change, and the brightness mis-adjustment is easy to occur, thus the accuracy of the screen brightness adjustment is low, the user experience is easily affected, and a certain energy loss is caused.

The patent applications EP 3 349 098 A and US 2016 /139 702 A disclose a method of and electronic device for automatically adjusting brightness of a screen, wherein the brightness adjustment is stopped when an ambient light sensor is blocked.

### SUMMARY

To overcome the problems in the related art, the present disclosure provides a method, apparatus, electronic device, and storage medium for regulating brightness of a screen.

According to a first aspect of the embodiments of the present disclosure, there is provided a method for controlling brightness of a screen according to claim 1.

Therefore, when the change of the light intensity is detected, the present disclosure firstly detects whether the photosensitive sensor of the electronic device is blocked, and then determines whether it is necessary to adjust the brightness of the screen according to the detection result, rather than directly adjusting the brightness of the screen, thereby effectively avoiding the situation that the brightness of the screen changes due to the occlusion of the photosensitive sensor in the case where the ambient light intensity does not change; and it is advantageous to prevent the brightness from being misadjusted and the energy loss caused by the mis-adjustment, and to improve accuracy of control of the brightness of the screen. Moreover, it is ensured that during the game, even if the user grips the electronic device horizontally and blocks the photosensitive sensor, the screen maintains the original brightness, instead of becoming dark, thereby optimizing the user experience.

In the landscape state, when the user touches the first area adjacent to the photosensitive sensor and the second area except the first area on the touch screen, the hand for touching the first area generally spans above the photosensitive sensor and falls on the first area, thereby blocking the photosensitive sensor, which causes the intensity of the light detected by the photosensitive sensor to be weakened. Therefore, the present disclosure determines whether the photosensitive sensor is blocked by detecting whether the screen is in a landscape state, and whether the touch operation is performed on the first area and the second area, thereby improving the detection accuracy of the occlusion of the photosensitive sensor, and improving the accuracy of regulation of brightness of the screen; and, in the detection process, only the gravity sensor and the touch sensor are applied, therefore the detection is easy to implement and the detection process is simple, which is beneficial to improve the detection efficiency.

From above, the present disclosure further detects the report rates of the touch operation of the first area and the second area when the screen is in the landscape state and the touch operation is performed on both the first area and the second area, thereby improving the detection accuracy of the touch operation. Furthermore, the present disclosure determines whether the photosensitive sensor is occluded based on the report rates, thereby improving the detection accuracy of the occlusion of the photosensitive sensor and the accuracy of the adjustment of brightness of the screen.

Optionally, before determining that the photosensitive sensor is blocked, the method further includes:
detecting, by a distance sensor, whether an object exists within a preset distance threshold, wherein the distance sensor is disposed adjacent to the photosensitive sensor; and
determining whether the photosensitive sensor is blocked according to a detection result.

In the case where the screen is in the landscape state, and the touch operation is performed on both the first area and the second area, although the photosensitive sensor is generally blocked, there is a possibility that the photosensitive sensor is not blocked. Therefore, in order to further improve the detection accuracy of the occlusion of the photosensitive sensor, the present disclosure further determines whether the photosensitive sensor is occluded according to the detection result of the distance sensor by combining the distance sensor; in this way, the above two conditions can be considered together, and it helps to improve the adjustment accuracy of the brightness of the screen and optimize the user experience.

Optionally, the detecting whether the photosensitive sensor is blocked further includes:
when the screen is in the landscape state and there is no touch operation on the first area and/or the second area, detecting, by a distance sensor, whether there is an object within a preset distance threshold, wherein the distance sensor is disposed adjacent to the photosensitive sensor; and
determining whether the photosensitive sensor is blocked according to a detection result.

In the landscape state, even if the touch operation is not detected in the first area and/or the second area, it may still happened that the user blocks the photosensitive sensor by the hands during the use of the electronic device, for example, when the user holds the electronic device to watch video with both hands or with one hand, one hand near the first area may block the photosensitive sensor. Therefore, in order to detect whether the photosensitive sensor is occluded in this case, the present disclosure further determines whether the photosensitive sensor is blocked by further combining the detection result of the distance sensor when there is no touch operation on the first area and/or the second area in the landscape state, which is beneficial to improve the regulation accuracy of brightness of the screen and optimize the user experience.

Optionally, the embodiments of the present disclosure also provide another solution for detecting whether the photosensitive sensor is blocked, i.e., the detecting whether the photosensitive sensor is blocked includes:
detecting whether the screen is in a landscape state;
detecting, by a distance sensor, whether an object exists within a preset distance threshold, wherein the distance sensor is disposed adjacent to the photosensitive sensor; and
determining whether the photosensitive sensor is blocked according to a detection result.

Compared with the portrait state (vertical screen state), the probability of the user blocking the photosensitive sensor in the landscape state is much greater. For example, the user holds the opposite ends of the electronic device with both hands (one of the ends of the electronic device is the end provided with the photosensitive sensor), or the user holds one end of the electronic device that is provided with the photosensitive sensor, or the user uses an application program and needs to span above the photosensitive sensor and fall on an area of the screen near the photosensitive sensor to achieve some application functions; these conditions will cause the photosensitive sensor to be blocked. In the present disclosure, by detecting whether the screen is in the landscape state and detecting whether there is an object within the preset distance threshold by the distance sensor, and then determining whether the photosensitive sensor is blocked based on the detection result, the detection step is simplified. Furthermore, the distance sensor and the photosensitive sensor are disposed adjacently, and as long as the object is detected within the preset distance threshold by the distance sensor in the landscape state (to exclude the condition that the distance sensor detects the object within the preset distance threshold due to the close contact with the earpiece), the object will block the photosensitive sensor, and when no object is detected within the preset distance threshold, there is no phenomenon of blocking the photosensitive sensor, the detection accuracy of the photosensitive sensor being blocked or not can be ensured, the control accuracy of the brightness of the screen is improved, and the user experience is optimized.

Optionally, the landscape state of the screen is detected by a gravity sensor.

Thus, the present disclosure realizes the detection of the landscape state of the screen by using the gravity sensor, which is advantageous for simplifying the detection process and improving the detection efficiency.

In the present disclosure, when the photosensitive sensor is occluded, by updating the adjustment threshold for triggering an event of automatically adjusting the brightness of the screen, the adjustment threshold is increased, thereby facilitating further preventing the mis-adjustment of brightness of the screen when the ambient light intensity does not change while the photosensitive sensor is occluded.

In the present disclosure, by adjusting the brightness of the screen according to the current light intensity parameter when the photosensitive sensor is not blocked, the brightness of the screen can be adjusted properly so as to adapt to the current use environment.

Optionally, before adjusting the brightness of the screen according to the current light intensity parameter, the method further includes:
displaying a first control and a second control on a current interface of the screen; wherein the first control is configured to trigger an event of automatically adjusting the brightness of the screen, and the second control is configured to trigger an event of canceling the automatic adjustment of the brightness of the screen; and
based on a currently triggered control, determining whether to adjust the brightness of the screen according to the current light intensity parameter.

Therefore, in the present disclosure, by displaying the controls for controlling the automatic adjustment of the brightness of the screen to the user before adjusting the brightness of the screen according to the current light intensity parameter, the user can determine whether to adjust the brightness of the screen according to the needs of the user, which is beneficial to further optimize the user experience.

According to a third aspect of the embodiments of the present disclosure, there is provided an electronic device, including: a processor; and a memory storing instructions executable by the processor. The processor is configured to is configured to perform the method for controlling brightness of a screen according to any one of claims 1-4.According to a fourth aspect of the embodiments of the present disclosure, there is provided a computer-readable storage medium having stored thereon instructions that, when executed by a processor of a device according to claim 5, cause the device to perform a method for controlling a brightness of a screen according to any one of claims 1-4.

Since, the electronic device, and the computer readable storage medium of the present disclosure all cover the method for regulating brightness of the screen of the present disclosure, the electronic device, and the computer readable storage medium of the present disclosure all include the advantageous technical effects of the aforementioned method for regulating brightness of the screen, which are not elaborated here.

It is to be understood that both the foregoing general description and the following detailed description are exemplary and explanatory only and are not restrictive of the disclosure, as claimed.

### BRIEF DESCRIPTION OF THE DRAWINGS

Fig. 1 is a flowchart of a method for controlling a brightness of a screen according to an exemplary embodiment of the present disclosure.
Fig. 2 is a flowchart illustrating a step of detecting whether a photosensitive sensor is blocked according to an exemplary embodiment of the present disclosure.
Fig. 3 is a schematic diagram showing a screen of a terminal device in a portrait state according to an exemplary embodiment of the present disclosure.
Fig. 4 is a schematic diagram showing a screen of a terminal device in a landscape state according to an exemplary embodiment of the present disclosure.
Fig. 5 is a schematic diagram of a first area and a second area of a screen according to an exemplary embodiment of the present disclosure.
Fig. 6 is a schematic diagram of a first area and another second area of a screen according to an exemplary embodiment of the present disclosure.
Fig. 7 is a schematic diagram showing a user's hand occluding a photosensitive sensor according to an exemplary embodiment of the present disclosure.
Fig. 8 is a flowchart illustrating a step of detecting whether a photosensitive sensor is blocked according to an exemplary embodiment of the present disclosure.
Fig. 9 is a flowchart illustrating a step of detecting whether a photosensitive sensor is blocked according to another exemplary embodiment of the present disclosure not forming part of the claimed invention.
Fig. 10 is a schematic diagram of an interface when a terminal device displays a first control and a second control according to an exemplary embodiment of the present disclosure.
Fig. 11 is a block diagram of an electronic device according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the present disclosure only tend to depict specific embodiments, rather than restricting the present disclosure. Unless the exceptional case in which the context clearly gives supports, the singular forms "a", "an", and "the" used in the present disclosure and accompany claims are intended to include the plural forms. It should also be appreciated that the expression "and/or" used herein indicates including any and all possible combinations of one or more of the associated listed items.

It should be understood, although terms first, second, third and the like are used in the present disclosure to depict various information, such information is not restricted by these terms. These terms are only used to distinguish information of the same type from each other. For example, without departing from the scope of the present disclosure, the first information may also be referred to as the second information. Similarly, the second information may also be referred to as the first information. Depending on context, the word "if' used herein may be explained to "when" or "upon" or "in response to determining ...".

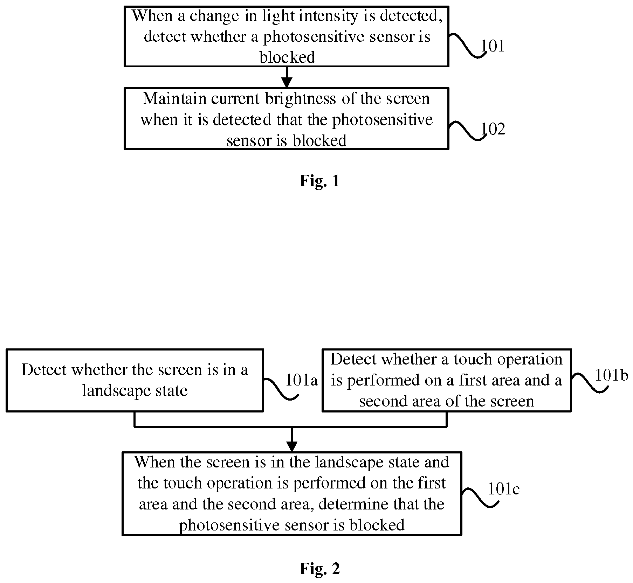

Fig. 1 is a flowchart of a method for controlling a brightness of a screen according to an exemplary embodiment of the present disclosure. As shown in Fig. 1, the method may be used in a terminal device, and includes the following steps.

In step 101, when a change in light intensity is detected, it is detected whether a photosensitive sensor of the terminal device is blocked.

In step 102, current brightness of the screen is maintained when it is detected that the photosensitive sensor is blocked.

The light intensity is detected by the photosensitive sensor of the terminal device. When an electrical signal corresponding to the current light intensity detected by the photosensitive sensor is different from an electrical signal corresponding to the light intensity detected last time, a change of the light intensity may be detected.

The change in the light intensity detected by the photosensitive sensor is usually caused by a change in the actual light intensity of the environment or the occlusion of the photosensitive sensor. In order to determine the cause of the change in the detected light intensity so as to avoid mis-adjusting the brightness in the case where the intensity of the ambient light does not change, in the step 101, when it is detected that the light intensity changes, it is further detected whether the photosensitive sensor is blocked.

Therefore, when the change of the light intensity is detected, the present disclosure firstly detects whether the photosensitive sensor of the terminal device is blocked, and then determines whether it is necessary to adjust the brightness of the screen according to the detection result, rather than directly adjusting the brightness of the screen, thereby effectively avoiding adjusting the brightness of the screen due to the occlusion of the photosensitive sensor in the case where the ambient light intensity does not change; and it is advantageous to prevent the brightness from being mis-adjusted and the energy loss caused by the mis-adjustment, and to improve accuracy of control of the brightness of the screen. Moreover, even if the user grips the terminal device horizontally and blocks the photosensitive sensor, the screen maintains the original brightness, instead of becoming dark, thereby optimizing the user experience.

Fig. 2 is a flowchart illustrating a step of detecting whether a photosensitive sensor is blocked according to an exemplary embodiment of the present disclosure. As shown in Fig. 2, the step of detecting whether the photosensitive sensor is blocked includes the following steps.

In step 101a, it is detected whether the screen is in a landscape state.

In step 101b, it is detected whether a touch operation is performed on a first area and a second area of the screen. The first area is adjacent to the photosensitive sensor, and the second area is an area on the screen except the first area.

In step 101c, when the screen is in the landscape state and the touch operation is performed on the first area and the second area, it is determined that the photosensitive sensor is blocked.

In the landscape state, when the user touches the first area adjacent to the photosensitive sensor and the second area except the first area in the touch screen, the hand for touching the first area generally spans above the photosensitive sensor and falls on the first area, thereby blocking the photosensitive sensor, which causes the intensity of the light detected by the photosensitive sensor to be weakened. Therefore, the present disclosure determines whether the photosensitive sensor is blocked by detecting whether the screen is in a landscape state, and whether the touch operation is performed on the first area and the second area, thereby improving the detection accuracy of the occlusion of the photosensitive sensor, and improving the accuracy of control of the brightness of the screen; and, in the detection process, it is sufficient only to apply the gravity sensor and the touch sensor, therefore the detection is easy to implement and the detection process is simple, which is beneficial to improve the detection efficiency.

In this embodiment, the order of the step 101a and the step 101b is not limited.

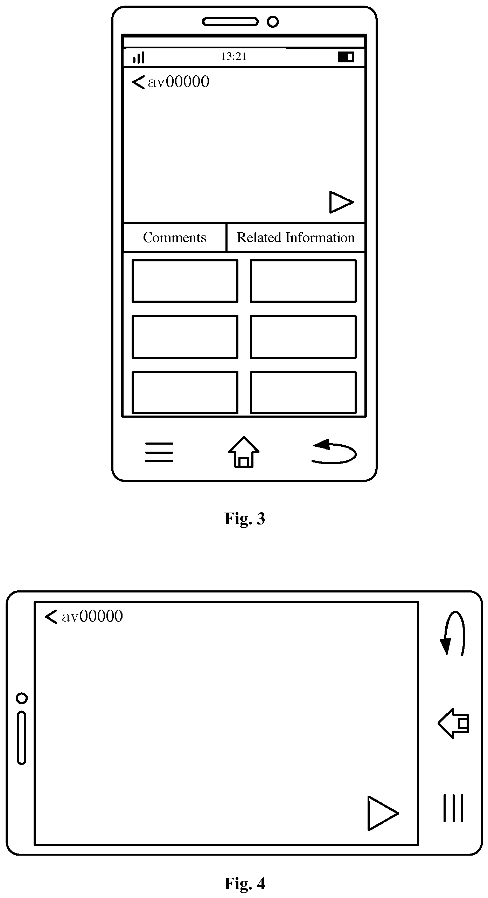

In the step 101a, the landscape state of the screen may be detected by the gravity sensor of the terminal device. Fig. 3 is a schematic diagram showing a screen of a terminal device in a portrait state according to an exemplary embodiment of the present disclosure; and Fig. 4 is a schematic diagram showing a screen of a terminal device in a landscape state according to an exemplary embodiment of the present disclosure.

In the step 101b, the touch operation of the first area and the second area is detected by the touch sensor of the terminal device, such as a touch screen of the terminal device. In order to determine whether the touch operation occurs in the first area or the second area, the first area and the second area of the screen may be pre-divided, e.g., by the developer in the development stage, and coordinates of the first area and the second area are saved in the terminal device.

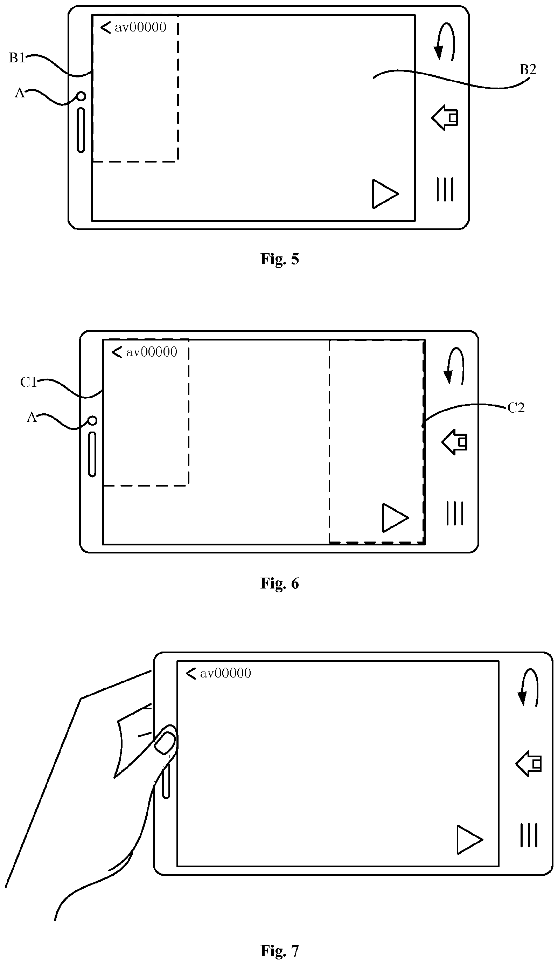

Fig. 5 is a schematic diagram of a first area and a second area of a screen according to an exemplary embodiment of the present disclosure. As shown in Fig. 5, the screen includes a photosensitive sensor A, a first area B 1 represented by a dotted frame, and a second area B2 except the dotted frame. In other embodiments, the second area may be a portion of other area than the first area and separated from the first area, as shown in Fig. 6. Fig. 6 is a schematic diagram showing a first area C1 and another second area C2 of the screen according to an exemplary embodiment of the present disclosure, wherein the first area C1 is represtned a first dotted frame, and the second area C2 is represented by a second dotted frame.

In an embodiment, in order to improve the detection accuracy of the touch operation and the accuracy of the screen brightness adjustment, in the step 101c (Fig. 2), before determining that the photosensitive sensor is blocked, the method further includes the following steps: detecting report rates of the touch operation for the first area and the second area; comparing the report rate of the first area is compared with a preset first report threshold, and the report rate of the second area with a preset second report threshold; and determining whether the photosensitive sensor is blocked according to the comparison results.

In this embodiment, the report rate are detected by the touch sensor of the terminal device, such as a touch screen of the terminal device. The first report threshold and the second report threshold are preset, e.g., by a developer during a development phase, or may be set by a user according to usage. The first report threshold may be equal to or approximately equal to the second report threshold such that, for example, a difference between the first report threshold and the second report threshold being less than 1. The difference being less than 1 is only an example. In other embodiments, other reasonable values may also be taken, and the value may be obtained by triggering a corresponding instruction when clicking controls displayed in the first area and the second area of the screen by fingers of both hands of the user while interacting through the screen.

In an embodiment, when the comparison result is: the report rate of the first area is greater than or equal to the first report threshold, and the report rate of the second area is greater than or equal to the second report threshold, it is determined that the photosensitive sensor is blocked.

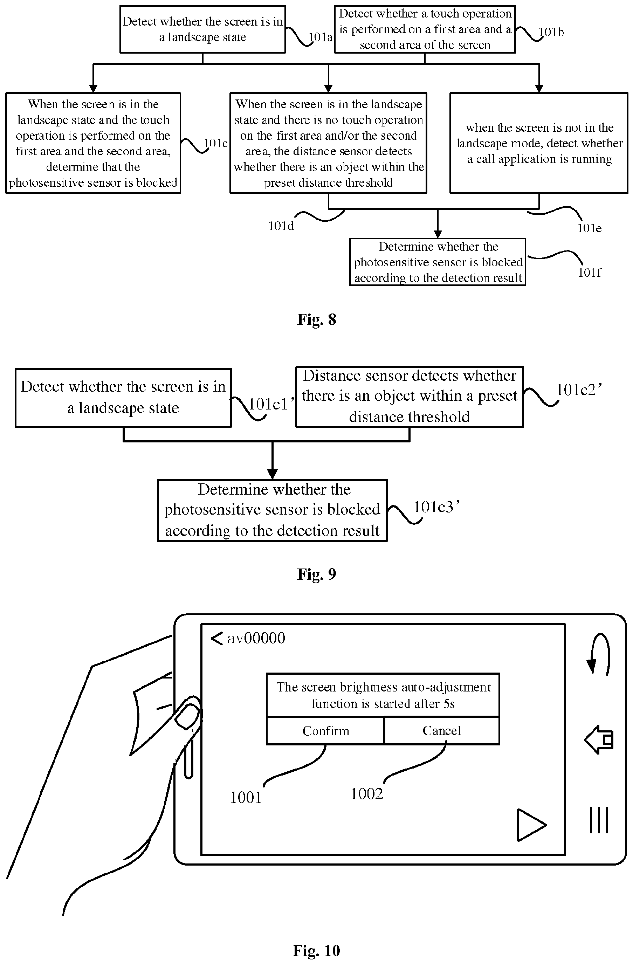

In an embodiment, in the landscape state, even if the touch operation is not detected in the first area and/or the second area, the user may block the photosensitive sensor by hands when using the terminal device. For example, when the user holds the terminal device to watch the video with both hands or one hand, the hand near the first area may block the photosensitive sensor, as shown in Fig. 7. Fig. 7 is a schematic diagram illustrating that the user's hand blocks the photosensitive sensor according to an exemplary embodiment of the present disclosure. Therefore, in order to realize the detection of whether the photosensitive sensor is blocked in this case, so as to further improve the accuracy of adjusting the brightness of the screen, the step of detecting whether the photosensitive sensor is blocked may further include the following steps, as shown in Fig. 8, which is a flowchart illustrating a step of detecting whether the photosensitive sensor is blocked according to an exemplary embodiment of the present disclosure.

In step 101d: when the screen is in the landscape state and there is no touch operation on the first area and/or the second area, the distance sensor detects whether there is an object within a preset distance threshold; wherein the distance sensor is disposed adjacent to the photosensitive sensor.

In step 101f: it is determined whether the photosensitive sensor is blocked according to the detection result.

In an embodiment, in the portrait state, the phenomenon of blocking the photosensitive sensor by the hand may also occur during use of the terminal device by the user. In order to also detect whether the photosensitive sensor is blocked in the portrait mode, and to eliminate the situation in which the distance sensor detects the object within the preset distance threshold due to the close contact with the earpiece (i.e., in this case, it is not regarded as the photosensitive sensor being blocked), the control accuracy of the brightness of the screen is further improved. As shown in Fig. 8, the step of detecting whether the photosensitive sensor is blocked may further include the following steps.

In step 101e: when the screen is not in the landscape mode (i.e., in a portrait state), it is detected whether a call application is running.

When the call application is running, a result that the photosensitive sensor is unblocked is outputted.

When the call application is not running, the distance sensor detects whether there is an object within a preset distance threshold.

In step 101f: it is determined whether the photosensitive sensor is blocked according to the detection result.

In the step 101d or the step 101e, in the step of determining whether the photosensitive sensor is blocked according to the detection result, the detection result includes the following two situations. In the first situation, the distance sensor detects that there is the object existing within the distance threshold; and in the second situation, the distance sensor does not detect the presence of the object within the distance threshold. Under the first detection result, it is determined that the photosensitive sensor is blocked; and under the second detection result, it is determined that the photosensitive sensor is not blocked.

In the embodiment, the distance sensor is disposed adjacent to the photosensitive sensor, and if there is an object being too close to the distance sensor, i.e., the distance sensor detects the exitence of an object within the distance threshold, the photosensitive sensor is likely blocked. Therefore, whether the photosensitive sensor is blocked may be determined by the detection result of the distance sensor within the distance threshold. The distance threshold may be acquired by the developer according to experiments, and the specific acquisition manner may be obtained by combining the present disclosure with the related art, which is not elaborated herein.

Fig. 9 is a flowchart illustrating a step of detecting whether the photosensitive sensor is blocked according to another exemplary embodiment of the present disclosure not forming part of the claimed invention. As shown in Fig. 9, the step of detecting whether the photosensitive sensor is blocked includes the following steps.

In step 101c1', it is detected whether the screen is in a landscape state.

In step 101c2', the distance sensor detects whether an object exists within a preset distance threshold. The distance sensor is disposed adjacent to the photosensitive sensor.

In step 101c3', it is determined whether the photosensitive sensor is blocked based on the detection result.

In the embodiments shown in the steps 101c1' to 101c3', for the understanding of the landscape state and the distance threshold, reference may be made to the foregoing description of the landscape state and the distance threshold, and details are not described herein.

The step 101c3' may include the following steps.

When it is detected that the screen is in the landscape state and the distance sensor detects an object within the preset distance threshold, it is determined that the photosensitive sensor is blocked.

When it is detected that the screen is not in the landscape state, and/or the distance sensor does not detect an object within the preset distance threshold, it is determined that the photosensitive sensor is unblocked.

Thereby, by detecting whether the screen is in the landscape state and detecting whether there is an object within the preset distance threshold by the distance sensor, and then determining whether the photosensitive sensor is blocked based on the detection results, the detection step is simplified. Furthermore, the distance sensor and the photosensitive sensor are disposed adjacently, and as long as the object is detected within the preset distance threshold by the distance sensor in the landscape state (to exclude the condition that the distance sensor detects the object within the preset distance threshold due to the close contact with the earpiece), the object may block the photosensitive sensor, and when no object is detected within the preset distance threshold, there is no blocking the photosensitive sensor, the detection accuracy of the photosensitive sensor being blocked or not can be ensured, the control accuracy of the brightness of the screen is improved, and the user experience is optimized.

In an embodiment, based on any of the foregoing embodiments, the method for controlling a brightness of a screen of the present disclosure further includes: when it is detected that the photosensitive sensor is not blocked, the brightness of the screen is adjusted according to a current light intensity parameter.

In the embodiment, adjusting the brightness of the screen according to the current light intensity parameter may be implemented with a traditional method known from the related art, and details are not described herein.

Therefore, in the present disclosure, by adjusting the brightness of the screen according to the current light intensity parameter when the photosensitive sensor is not blocked, the brightness of the screen can be adjusted properly so as to adapt to the current use environment.

In an embodiment, before adjusting the brightness of the screen according to the current light intensity parameter, the following steps are further included: a first control and a second control are displayed on a current interface of the screen, wherein the first control is used to trigger an event of automatically adjusting the brightness of the screen, and the second control is used to trigger an event of canceling the automatic adjustment of the brightness of the screen; it is determined, according to the currently triggered control, whether to adjust the brightness of the screen according to the current light intensity parameter.

The above operation is performed when it is detected that the photosensitive sensor is unblocked.

Fig. 10 is a schematic diagram of an interface when the terminal device displays the first control and the second control according to an exemplary embodiment of the present disclosure. As shown in Fig. 10, the first control 1001 and the second control 1002 may be configured in a pop-up window, then when it is detected that the photosensitive sensor is not blocked, the pop-up window pops up. The pop-up window displays the text content, e.g., "The screen brightness auto-adjustment function is started after 5s", the first control 1001, and the second control 1002. The display content of the first control 1001 may be: "Confirm", and the display content of the second control 1002 may be: "Cancel". In other embodiments, instead of displaying the pop-up window, the content "Turn on the screen brightness auto-adjustment" may be displayed directly in the first control 1001, and the content "Cancel the screen brightness auto-adjustment" is displayed in the second control 1002. Thus, the user can clearly know the functions of the first control 1001 and the second control 1002 so as to trigger the desired control.

In the embodiment, when the user clicks on the first control 1001 to trigger an event of automatically adjusting the brightness of the screen, the system of the terminal device adjusts the brightness of the screen according to the current light intensity parameter detected by the photosensitive sensor. When the user clicks on the second control 1002 to trigger an event of cancelling the automatic adjustment of the brightness of the screen, the system of the terminal device does not perform the operation of adjusting the brightness of the screen, but maintains the current brightness to meet the current usage requirements of the user.

In the present disclosure, by displaying the controls for controlling the automatic adjustment of the brightness of the screen to the user before adjusting the brightness of the screen according to the current light intensity parameter, the user can determine whether to adjust the brightness of the screen according to the needs of the user, which is beneficial to further optimize the user experience.

In an embodiment, based on any of the foregoing embodiments, when it is detected or determined that the photosensitive sensor is blocked, the method for adjusting the brightness of the screen of the present disclosure further includes the following step: a first adjustment threshold is updated to a second adjustment threshold, where the second adjustment threshold is greater than the first adjustment threshold, and the first adjustment threshold or the second adjustment threshold is used to trigg an event of automatic adjustment of brightness of the screen.

The first adjustment threshold and the second adjustment threshold correspond to a degree of change of the light intensity detected by the photosensitive sensor. For example, assuming that the light intensity detected by the photosensitive sensor last time is *a*, and the light intensity detected this time is b, then only if an absolute value of a difference between *b* and *a* is greater than or equal to the first adjustment threshold or the second adjustment threshold, the event of automatically adjusting the brightness of the screen is triggered.

Thus, in the embodiment, when the photosensitive sensor is occluded, by updating the adjustment threshold for triggering the event of automatically adjusting the brightness of the screen, the adjustment threshold is increased, thereby facilitating further preventing the mis-adjustment of brightness of the screen when the ambient light intensity does not change while the photosensitive sensor is occluded.

Corresponding to the foregoing embodiments of the method for controlling the brightness of the screen, the present disclosure further provides an apparatus for controlling a brightness of a screen, the apparatus includes: a detecting module and a brightness control module.

The detecting module is configured to detect whether a photosensitive sensor is blocked when a change in the light intensity is detected.

The brightness control module is configured to maintain current brightness of the screen when the photosensitive sensor is blocked.

In this embodiment, the detecting module includes: a light intensity detecting submodule, a landscape detecting submodule, a touch detecting submodule, and a first determining submodule.

The light intensity detecting submodule is configured to detect whether the light intensity changes.

The landscape detecting submodule is configured to detect whether the screen is in a landscape state when the light intensity changes.

The touch detecting submodule is configured to detect whether a touch operation is performed on a first area and a second area of the screen when the light intensity changes or when the screen is in the landscape state. The first area is adjacent to the photosensitive sensor, and the second area is another area in the screen except the first area.

The first determining submodule is configured to: when the screen is in the landscape state, and the touch operation is performed on the first area and the second area, determine that the photosensitive sensor is blocked.

In an embodiment, the first determining submodule includes: a report detecting submodule, a report comparing submodule, and a result determination submodul.

The report detecting submodule is configured to detect report rates of the touch operation for the first area and the second area when the screen is in the landscape state and the touch operation is performed in the first area and the second area.

The report comparing submodule is configured to compare the report rate of the first area with a preset first report threshold, and compare the report rate of the second area with a preset second report threshold.

The result determining submodule is configured to determine whether the photosensitive sensor is blocked based on the comparison results.

In another embodiment not forming part of the claimed invention the first determining submodule may be replaced by another scheme, that is, the new first determining submodule includes: a first distance detecting submodule, and a result determining submodule.

The first distance detecting submodule is configured to: when the screen is in the landscape state, and the touch operation is performed on the first area and the second area, the distance sensor detects whether there is an object within the preset distance threshold.

The result determining submodule is configured to determine whether the photosensitive sensor is blocked based on the detection result.

In an embodiment, the detecting module may further include: a second distance detecting submodule, and a second determining submodule.

The second distance detecting submodule is configured to: when the screen is in the landscape state, and the first area and/or the second area have no touch operation, the distance sensor detects whether there is an object within the preset distance threshold; wherein the distance sensor is disposed adjacent to the photosensitive sensor.

The second determining submodule is configured to determine whether the photosensitive sensor is blocked according to the detection result of the second distance detecting submodule.

In an embodiment, the detecting module may further include: a call detecting submodule, a first result output submodule, a third distance detecting submodule, and a second result output submodule.

The call detecting submodule is configured to detect whether a call application is running when the screen is not in the landscape state (i.e., in a portrait state).

The first result output submodule is configured to output a result that the photosensitive sensor is unblocked when the call application is running.

The third distance detecting submodule is configured to: when the calling application is not in operation, detect whether an object exists in a preset distance threshold by using the distance sensor.

The second result output submodule is configured to determine whether the photosensitive sensor is blocked according to the detection result. In other embodiments not forming part of the claimed invention, the detecting module may be replaced with other schemes, that is, the new detecting module includes: a light intensity detecting submodule, a landscape detecting submodule, a distance detecting submodule, and a determining submodule.

The light intensity detecting submodule is configured to detect whether the light intensity changes.

The landscape detecting submodule is configured to detect whether the screen is in the landscape state when the light intensity changes.

The distance detecting submodule is configured to detect whether an object exists within a preset distance threshold by the distance sensor when the light intensity changes or when the screen is in the landscape state. The distance sensor is disposed adjacent to the photosensitive sensor.

The determining submodule is configured to determine whether the photosensitive sensor is blocked according to the detection result.

Accordingly, based on the new detecting module, the determination submodule is configured to: determine that the photosensitive sensor is blocked when the screen is in the landscape state and detect, by the distance sensor, an object within the preset distance threshold; and determine that the photosensitive sensor is unblocked when the screen is not in the landscape state, and/or the distance sensor does not detect an object within the preset distance threshold.

In an embodiment, based on any of the foregoing embodiments, the brightness control module is further configured to: adjust the brightness of the screen according to a current light intensity parameter when the photosensitive sensor is unblocked.

In an embodiment, the apparatus further includes: a control display module, and an adjustment determining module.

The control display module is configured to: display a first control and a second control on a current interface of the screen before the brightness control module adjusts the brightness of the screen; wherein the first control is used to trigger an event of automatically adjusting the brightness of the screen, and the second control is used to trigger an event that cancels the automatic adjustment of the brightness of the screen.

The adjustment determining module is configured to: determine whether to adjust the brightness of the screen according to the current light intensity parameter according to the currently triggered control.

The adjustment determining module outputs an instruction for adjusting the brightness of the screen to the brightness control module, so that the brightness control module maintains or adjusts the current brightness of the screen according to the received instruction.

In an embodiment, based on any of the foregoing apparatus, the apparatus further includes: a threshold update module.

The threshold update module is configured to: when the photosensitive sensor is blocked, update a first adjustment threshold to a second adjustment threshold, wherein the second adjustment threshold is greater than the first adjustment threshold, and the first adjustment threshold or the second adjustment threshold is used to trigger an event of automatically adjusting the brightness of the screen.

Since the modules in the apparatus of the present disclosure correspond to the foregoing method for controlling the brightness of the screen, reference may be made to the foregoing method for details.

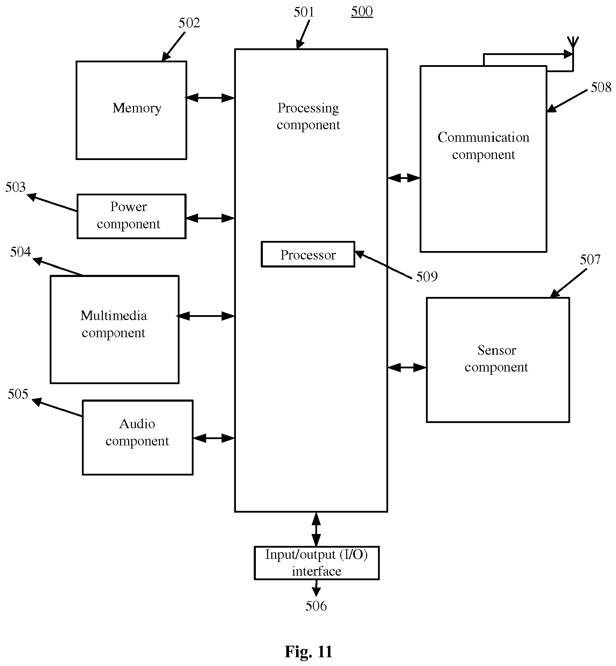

Fig. 11 is a block diagram of an electronic device 500 according to an exemplary embodiment of the present disclosure. As shown in Fig. 11, the electronic device 500 may be a computer, a mobile phone, a digital broadcast terminal, a messaging apparatus, a gaming console, a tablet, a medical apparatus, exercise equipment, a personal digital assistant, and other terminal devices.

Referring to Fig. 11, the electronic device 500 includes the following components: a processing component 501, a memory 502, a screen, a photosensitive sensor, a touch sensor, a gravity sensor, a distance sensor and optionally one or more of a power component 503, a multimedia component 504, an audio component 505, an input/output (I/O) interface 506, a sensor component 507, and a communication component 508.

The processing component 501 typically controls overall operations of the electronic device 500, such as the operations associated with display, telephone calls, data communications, camera operations, and recording operations. The processing component 501 includes one or more processors 509 to execute instructions to perform all or part of the steps in the above described methods. Moreover, the processing component 501 may include one or more modules which facilitate the interaction between the processing component 501 and other components. For instance, the processing component 501 may include a multimedia module to facilitate the interaction between the multimedia component 504 and the processing component 501.

The memory 502 is configured to store various types of data to support the operation of the electronic device 500. Examples of such data include instructions for any applications or methods operated on the electronic device 500, contact data, phonebook data, messages, pictures, video, etc. The memory 502 may be implemented using any type of volatile or nonvolatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 503 provides power to various components of the electronic device 500. The power component 503 may include a power management system, one or more power sources, and any other components associated with the generation, management, and distribution of power in the electronic device 500.

The multimedia component 504 includes a screen providing an output interface between the electronic device 500 and the user. In some embodiments, the screen may include a touch panel (TP), and the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 504 includes a front camera and/or a rear camera. The front camera and the rear camera may receive an external multimedia datum while the electronic device 500 is in an operation mode, such as a photographing mode or a video mode. Each of the front camera and the rear camera may be a fixed optical lens system or have focus and optical zoom capability.

The audio component 505 is configured to output and/or input audio signals. For example, the audio component 505 includes a microphone (MIC) configured to receive an external audio signal when the electronic device 500 is in an operation mode, such as a call mode, a recording mode, and a voice recognition mode. The received audio signal may be further stored in the memory 502 or transmitted via the communication component 508. In some embodiments, the audio component 505 further includes a speaker to output audio signals.

The I/O interface 502 provides an interface between the processing component 501 and peripheral interface modules, such as a keyboard, a click wheel, buttons, and the like. The buttons may include, but are not limited to, a home button, a volume button, a starting button, and a locking button.

The sensor component 507 includes one or more sensors to provide status assessments of various aspects of the electronic device 500. For instance, the sensor component 507 may detect an open/closed status of the electronic device 500, relative positioning of components, e.g., the display and the keypad, of the electronic device 500, a change in position of the electronic device 500 or a component of the electronic device 500, a presence or absence of user contact with the electronic device 500, an orientation or an acceleration/deceleration of the electronic device 500, and a change in temperature of the electronic device 500. The sensor component 507 may include a proximity sensor configured to detect the presence of nearby objects without any physical contact. The sensor component 507 may also include a photosensitive sensor, such as a CMOS or CCD image sensor, for use in imaging applications. In some embodiments, the sensor component 507 may also include an accelerometer sensor, a gyroscope sensor, a magnetic sensor, a pressure sensor, a temperature sensor, a photoelectric sensor or a GPS sensor.

The communication component 508 is configured to facilitate communication, wired or wirelessly, between the electronic device 500 and other apparatus. The electronic device 500 may access a wireless network based on a communication standard, such as WiFi, 2G, or 3G, 4G, or a combination thereof. In one exemplary embodiment, the communication component 508 receives a broadcast signal or broadcast associated information from an external broadcast management system via a broadcast channel. In one exemplary embodiment, the communication component 508 further includes a near field communication (NFC) module to facilitate short-range communications. In some embodiments, the communication component 508 may be implemented based on a radio frequency identification (RFID) technology, an infrared data association (IrDA) technology, an ultra-wideband (UWB) technology, a Bluetooth (BT) technology, and other technologies.

In exemplary embodiments, the electronic device 500 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above described methods.

The above-described apparatus embodiments are only illustrative. The units illustrated as separate components may be or may not be separated physically, the component illustrated as a unit may be or may not be a physical unit, i.e., may be located at one location, or may be distributed into multiple network units. Apart or all of the modules may be selected to achieve the purpose of the solution in the present disclosure according to actual requirements. The person skilled in the art can understand and implement the present disclosure without paying inventive labor.

Corresponding to the foregoing embodiments of the method for controlling the brightness of the screen, the present disclosure further provides a computer-readable storage medium having stored thereon instructions that, when executed by the processor 509, cause the electronic device 500 to perform the method for controlling the brightness of the screen, including: detecting whether a photosensitive sensor is blocked when a change in light intensity is detected; and maintaining current brightness of the screen when it is detected that the photosensor is blocked.

The present disclosure may take the form of a computer program product embodied on one or more storage media (including, but not limited to, a disk storage, a CD-ROM, an optical storage, etc.) containing program codes. The computer-readable storage media includes both permanent and non-persistent, removable and non-removable media, and information storage may be implemented by any method or technology. The information may be computer-readable instructions, data structures, modules of programs, or other data. Examples of the computer storage media include, but are not limited to, a phase change memory (PRAM), a static random access memory (SRAM), a dynamic random access memory (DRAM), other types of random access memory (RAM), read only memory. (ROM), electrically erasable programmable read only memory (EEPROM), flash memory or other memory technology, a compact disk read only memory (CD-ROM), a digital versatile disk (DVD) or other optical storage, and magnetic tape cartridges, and magnetic tape storage or other magnetic storage devices or any other non-transportable media may be used to store information that may be accessed by a computing device.

Other embodiments of the present disclosure will be apparent to those skilled in the art from consideration of the specification and practice of the disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope of the disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A method for controlling brightness of a screen of an electronic device comprising the screen, a photosensitive sensor, a touch sensor, means for detecting an orientation of the electronic device and a processing component (502), comprising:
detecting (101) whether the photosensitive sensor (A) is blocked when a change in light intensity is detected;
maintaining (102) a current brightness of the screen when it is detected that the photosensitive sensor is blocked; and
when it is detected that the photosensitive sensor (A) is unblocked, adjusting the brightness of the screen according to a current light intensity,
wherein the detecting whether the photosensitive sensor (A) is blocked comprises:
detecting (101a) whether the screen is in a landscape state;
detecting (101b) whether a touch operation is performed on a first area (B1, C1) and a second area (B2, C2) of the screen, wherein the first area (B1, C1) is adjacent to the photosensitive sensor (A), and the second area (B2, C2) is an area other than the first area (B1, C1) on the screen;
when the screen is in the landscape state and the touch operation is performed on the first area (B1, C1) and the second area (B2, C2):
detecting report rates of the touch operation for the first area (B1, C1) and the second area (B2, C2), wherein the report rates are detected by the touch sensor;
comparing the report rate of the first area (B1, C1) with a preset first report threshold;
comparing the report rate of the second area (B2, C2) with a preset second report threshold; and
determining that the photosensitive sensor (A) is blocked when the report rate of the first area (B1, C1) is greater than or equal to the first report threshold and the report rate of the second area (B2, C2) is greater than or equal to the second report threshold; and
**characterized in that**:
when it is detected that the photosensitive sensor (A) is blocked, the method further comprises:
updating an adjustment threshold from a first adjustment threshold to a second adjustment threshold, wherein the first adjustment threshold and the second adjustment threshold correspond to a degree of change of the light intensity detected by the photosensitive sensor, wherein the second adjustment threshold is greater than the first adjustment threshold; and
wherein adjusting the brightness of the screen according to a current light intensity comprises:
when an absolute value of a difference between a currently detected light intensity and a previously detected light intensity is greater than or equal to the adjustment threshold, automatically adjusting the brightness of the screen according to the current light intensity.

2. The method according to claim 1, wherein the detecting (101) whether the photosensitive sensor (A) is blocked further comprises:
when the screen is in the landscape state and there is no touch operation on the first area (B1, C1) and/or the second area (B2, C2), detecting (101d), by a distance sensor, whether there is an object within a preset distance threshold, wherein the distance sensor is disposed adjacent to the photosensitive sensor (A); and
determining (101f) whether the photosensitive sensor (A) is blocked according to a detection result.

3. The method according to claim 1, wherein the landscape state of the screen is detected by a gravity sensor.

4. The method according to claim 1, wherein before adjusting the brightness of the screen according to the current light intensity parameter, the method further comprises:
displaying a first control (1001) and a second control (1002) on a current interface of the screen, wherein the first control (1001) is configured to trigger an event of automatically adjusting the brightness of the screen, and the second control (1002) is configured to trigger an event of cancelling the automatic adjustment of the brightness of the screen; and
based on a currently triggered control, determining whether to adjust the brightness of the screen according to the current light intensity parameter.

5. An electronic device (500) comprising a photosensitive sensor, a touch sensor, a gravity sensor and a distance sensor; and
a processor (509);
a memory (502) for storing instructions executable by the processor (509); and a screen;
wherein the processor (509) is configured to perform the method for controlling brightness of a screen according to any one of claims 1-4.

6. A computer-readable storage medium having stored thereon instructions that, when executed by a processor (509) of a device (500) according to claim 5, cause the device (500) to perform the method for controlling brightness of the screen according to any one of claims 1-4.

## Patentansprüche

1. Verfahren zur Steuerung der Helligkeit eines Bildschirms einer elektronischen Vorrichtung, die den Bildschirm, einen lichtempfindlichen Sensor, einen Touch-Sensor, Mittel zum Detektieren einer Orientierung der elektronischen Vorrichtung, und eine Verarbeitungskomponente (502) aufweist, umfassend: Detektieren (101), ob der lichtempfindliche Sensor (A) blockiert ist, wenn eine Änderung der Lichtintensität detektiert wird;
Beibehalten (102) einer aktuellen Helligkeit des Bildschirms, wenn detektiert wird, dass der lichtempfindliche Sensor blockiert ist; und
wenn detektiert wird, dass der lichtempfindliche Sensor (A) freigegeben ist, Anpassen der Helligkeit des Bildschirms entsprechend einer aktuellen Lichtintensität,
wobei das Detektieren, ob der lichtempfindliche Sensor (A) blockiert ist, umfasst:
Detektieren (101a), ob sich der Bildschirm in einem Querformatzustand befindet;
Detektieren (101b), ob eine Touch-Bedienung an einem ersten Bereich B1, C1) und einem zweiten Bereich (B2, C2) des Bildschirms erfolgt, wobei der erste Bereich (B1, C1) angrenzend an den lichtempfindlichen Sensor (A) ist, und wobei der zweite Bereich (B2, C2) ein anderer Bereich als der erste Bereich (B1, C1) auf dem Bildschirm ist;
wenn sich der Bildschirm in dem Querformatzustand befindet und die Touch-Bedienung an dem ersten Bereich (B1, C1) und dem zweiten Bereich (B2, C2) durchgeführt wird:
Detektieren von Abfrageraten der Touch-Bedienung für den ersten Bereich (B1, C1) und den zweiten Bereich (B2, C2), wobei die Abfrageraten von dem Touch-Sensor detektiert werden;
Vergleichen der Abfragerate des ersten Bereichs (B1, C1) mit einem voreingestellten ersten Abfrageschwellenwert;
Vergleichen der Abfragerate des zweiten Bereichs (B2, C2) mit einem voreingestellten zweiten Abfrageschwellenwert; und
Bestimmen, dass der lichtempfindliche Sensor (A) blockiert ist, wenn die Abfragerate des ersten Bereichs (B1, C1) größer als oder gleich dem ersten Abfrageschwellenwert ist und die Abfragerate des zweiten Bereichs (B2, C2) größer als oder gleich dem zweiten Abfrageschwellenwert ist; und
**dadurch gekennzeichnet, dass**
wenn detektiert wird, dass der lichtempfindliche Sensor (A) blockiert ist, das Verfahren ferner umfasst:
Aktualisieren eines Anpassungsschwellenwerts von einem ersten Anpassungsschwellenwert zu einem zweiten Anpassungsschwellenwert, wobei der erste Anpassungsschwellenwert und der zweite Anpassungsschwellenwert einem Grad der Änderung der von dem lichtempfindlichen Sensor detektierten Lichtintensität entsprechen, wobei der zweite Anpassungsschwellenwert größer als der erste Anpassungsschwellenwert ist; und
wobei das Anpassen der Helligkeit des Bildschirms entsprechend einer aktuellen Lichtintensität umfasst:
wenn ein Absolutwert einer Differenz zwischen einer aktuell detektierten Lichtintensität und einer zuvor detektierten Lichtintensität größer als oder gleich dem Anpassungsschwellenwert ist, automatisches Anpassen der Helligkeit des Bildschirms entsprechend der aktuellen Lichtintensität.

2. Verfahren nach Anspruch 1, wobei das Detektieren (101), ob der lichtempfindliche Sensor (A) blockiert ist, ferner umfasst:
wenn sich der Bildschirm in dem Querformatzustand befindet und keine Touch-Bedienung an dem ersten Bereich (B1, C1) und/oder dem zweiten Bereich (B2, C2) vorliegt, Detektieren (101d), mittels eines Abstandssensors, ob ein Objekt innerhalb eines vorbestimmten Abstandsschwellenwerts liegt, wobei der Abstandssensor angrenzend an den lichtempfindlichen Sensor (A) angeordnet ist; und
Bestimmen (101f), entsprechend einem Detektionsergebnis, ob der lichtempfindliche Sensor (A) blockiert ist.

3. Verfahren nach Anspruch 1, wobei der Querformatzustand des Bildschirms von einem Schwerkraftsensor detektiert wird.

4. Verfahren nach Anspruch 1, wobei das Verfahren vor dem Anpassen der Helligkeit des Bildschirms entsprechend dem aktuellen Lichtintensitätsparameter ferner umfasst:
Anzeigen einer ersten Steuerung (1001) und einer zweiten Steuerung (1002) auf einer aktuellen Schnittstelle des Bildschirms, wobei die erste Steuerung (1001) dazu ausgebildet ist, ein Ereignis zur automatischen Anpassung der Helligkeit des Bildschirms auszulösen, und wobei die zweite Steuerung (1002) dazu ausgebildet ist, ein Ereignis zum Abbruch der automatischen Anpassung der Helligkeit des Bildschirms auszulösen; und
basierend auf einer aktuell ausgelösten Steuerung, Bestimmen, ob die Helligkeit entsprechend dem aktuellen Lichtintensitätsparameter angepasst werden soll.

5. Elektronische Vorrichtung (500), die einen lichtempfindlichen Sensor, einen Touch-Sensor, einen Schwerkraftsensor und einen Abstandssensor aufweist; und
einen Prozessor (509);
einen Speicher (502) zum Speichern von Anweisungen, die von dem Prozessor (509) ausführbar sind; und
einen Bildschirm;
wobei der Prozessor (509) dazu ausgebildet ist, das Verfahren zur Steuerung der Helligkeit eines Bildschirms nach einem der Ansprüche 1-4 durchzuführen.

6. Computerlesbares Speichermedium, auf dem Anweisungen gespeichert sind, die bei Ausführung durch einen Prozessor (509) einer Vorrichtung (500) nach Anspruch 5 bewirken, dass die Vorrichtung (500) das Verfahren zur Steuerung der Helligkeit des Bildschirms nach einem der Ansprüche 1-4 durchführt.

## Revendications

1. Procédé de commande de luminosité d'un écran d'un dispositif électronique comprenant l'écran, un capteur photosensible, un capteur tactile, un moyen de détection d'orientation du dispositif électronique et un composant de traitement (502), comprenant :
la détection (101) du blocage ou non du capteur photosensible (A) lorsqu'un changement d'intensité lumineuse est détecté ;
le maintien (102) d'une luminosité en cours de l'écran lorsqu'il est détecté que le capteur photosensible est bloqué ; et
lorsqu'il est détecté que le capteur photosensible (A) est débloqué, le réglage de la luminosité de l'écran en fonction de l'intensité lumineuse en cours,
dans lequel la détection du blocage ou non du capteur photosensible (A) comprend :
la détection (101a) du fait que l'écran est en mode paysage ou pas ;
la détection (101b) du fait qu'une opération tactile est ou pas effectuée sur une première zone (B1, C1) et une seconde zone (B2, C2) de l'écran, dans lequel la première zone (B1, C1) est adjacente au capteur photosensible (A) et la seconde zone (B2, C2) est une zone différente de la première zone (B1, C1) de l'écran ;
lorsque l'écran est en mode paysage et que l'opération tactile est effectuée sur la première zone (B1, C1) et la seconde zone (B2, C2) :
la détection des taux de rapport de l'opération tactile pour la première zone (B1, C1) et la seconde zone (B2, C2), dans lequel les taux de rapport sont détectés par le capteur tactile ;
la comparaison du taux de rapport de la première zone (B1, C1) à un premier seuil de rapport prédéfini ;
la comparaison du taux de rapport de la seconde zone (B2, C2) à un second seuil de rapport prédéfini ; et
la détermination du fait que le capteur photosensible (A) est bloqué lorsque le taux de rapport de la première zone (B1, C1) est supérieur ou égal au premier seuil de rapport et que le taux de rapport de la seconde zone (B2, C2) est supérieur ou égal au second seuil de rapport ; et
**caractérisé en ce que** :
lorsqu'il est détecté que le capteur photosensible (A) est bloqué, le procédé comprend en outre :
la mise à jour d'un seuil de réglage d'un premier seuil de réglage à un second seuil de réglage, dans lequel le premier seuil de réglage et le second seuil de réglage correspondent à un degré de changement de l'intensité lumineuse détectée par le capteur photosensible, dans lequel le second seuil de réglage est supérieur au premier seuil de réglage ; et
dans lequel le réglage de la luminosité de l'écran en fonction de l'intensité lumineuse en cours comprend :
lorsqu'une valeur absolue d'une différence entre une intensité lumineuse en cours de détection et une intensité lumineuse précédemment détectée est supérieure ou égale au seuil de réglage, l'ajustement automatique de la luminosité de l'écran en fonction de l'intensité lumineuse en cours.

2. Procédé selon la revendication 1, dans lequel la détection (101) du blocage ou non du capteur photosensible (A) comprend en outre :
lorsque l'écran est en mode paysage et qu'il n'y a pas d'opération tactile sur la première zone (B1, C1) et/ou la seconde zone (B2, C2), la détection (101d), par un capteur de distance, de la présence ou non d'un objet à l'intérieur d'un seuil de distance prédéfini, dans lequel le capteur de distance est disposé de manière adjacente au capteur photosensible (A) ; et
la détermination (101f) du blocage ou non du capteur photosensible (A) en fonction d'un résultat de détection.

3. Procédé selon la revendication 1, dans lequel l'état de paysage de l'écran est détecté par un capteur de gravité.

4. Procédé selon la revendication 1, dans lequel, avant le réglage de la luminosité de l'écran en fonction du paramètre d'intensité lumineuse actuel, le procédé comprend en outre :
l'affichage d'une première commande (1001) et une seconde commande (1002) sur une interface en cours de l'écran, dans lequel la première commande (1001) est configurée pour déclencher un événement de réglage automatique de la luminosité de l'écran, et la seconde commande (1002) est configurée pour déclencher un événement d'annulation du réglage automatique de la luminosité de l'écran ; et
en fonction d'une commande en cours de déclenchement, la détermination du fait qu'il faut ajuster ou pas la luminosité de l'écran en fonction du paramètre d'intensité lumineuse en cours.

5. Dispositif électronique (500) comprenant un capteur photosensible, un capteur tactile, un capteur de gravité et un capteur de distance ; et
un processeur (509) ;
une mémoire (502) permettant de stocker des instructions exécutables par le processeur (509) ; et
un écran ;
dans lequel le processeur (509) est configuré pour mettre en oeuvre le procédé de commande de luminosité d'un écran selon l'une quelconque des revendications 1 à 4.

6. Support de stockage lisible par ordinateur sur lequel sont stockées des instructions qui, lorsqu'elles sont exécutées par un processeur (509) d'un dispositif (500) selon la revendication 5, amènent le dispositif (500) à mettre en oeuvre le procédé de commande de luminosité de l'écran selon l'une quelconque des revendications 1 à 4.
